# EUROPÄISCHE PATENTSCHRIFT

(11) **EP 0 929 035 B1**
(45) Veröffentlichungstag und Bekanntmachung des Hinweises auf die Patenterteilung: **31.07.2002**
(21) Anmeldenummer: 99100182.7
(22) Anmeldetag: 07.01.1999
(51) Int. Cl.: G06F 11/00, G06F 1/32

(54) **Verfahren zum Synchronisieren einer elektronischen Einrichtung zur Funktionsüberwachung eines Mikroprozessors sowie elektronische Einrichtung zur Durchführung des Verfahrens**
Method for synchronising an electronic device for monitoring the operation of a microprocessor and electronic device for performing the method
Méthode de synchronisation d'un dispositif électronique assurant la surveillance du fonctionnement d'un microprocesseur et dispositif électronique pour la mise en oeuvre de la méthode

(30) Priorität: 08.01.1998 DE 19800462
(43) Veröffentlichungstag der Anmeldung: 14.07.1999
(73) Patentinhaber: Infineon Technologies AG, 81669 München (DE); Leopold Kostal GmbH & Co. KG, 58507 Lüdenscheid (DE)
(72) Erfinder: Huckfeld, Olaf, 58099 Hagen (DE); Lenz, Michael, 85604 Zorneding (DE)
(74) Vertreter: Patentanwälte Westphal, Mussgnug & Partner

(56) Entgegenhaltungen:
- EP-A- 0 390 639
- "WATCHDOG TIMER IN POWER-MANAGEMENT SYSTEM" IBM TECHNICAL DISCLOSURE BULLETIN, Bd. 41, Nr. 1, Januar 1998, Seite 737 XP000772275

## Beschreibung

Die Erfindung bezieht sich auf das Gebiet von Überwachungsmethoden zum Überprüfen der Funktionstüchtigkeit eines Mikroprozessors, vor allem wenn diese aus einem Ruhemodus in einen Arbeitsmodus hochgefahren werden.

Die Erfindung betrifft insbesondere ein Verfahren zum Synchronisieren einer elektronischen Einrichtung zur Funktionsüberwachung eines Mikroprozessors (Watchdog) mit dem Mikroprozessor beim Hochfahren des Mikroprozessors aus einem Ruhemodus in einen Arbeitsmodus,
a) wobei die Synchronisierung die Bereitstellung eines von dem Mikroprozessor erzeugten, an die Überwachungseinrichtung übertragenen, die Betriebsbereitschaft des Mikroprozessors signalisierenden Triggersignals umfaßt,
b) wobei die Überwachungseinrichtung zum Empfangen der Triggersignale zeitlich zwischen einem CLOSED-Fensterstatus bei dem ein Triggersignal nicht von der Überwachungseinrichtung erfaßt werden kann, und einem OPEN-Fensterstatus, bei dem das empfangende Triggersignal eine Synchronisierung zwischen dem Mikroprozessor und der Überwachungseinrichtung herbeiführt, toggelt.

Ferner betrifft die Erfindung eine elektronische Einrichtung zur Funktionsüberwachung eines Mikroprozessors (Watchdog) mit einem Triggersignaleingang, der zeitlich getaktet zwischen einer Sperrstellung (CLOSED-Fenster) und einer Durchlaßstellung (OPEN-Fenster) toggelt, so daß ein Triggersignalempfang zur Herbeiführung einer Synchronisation zwischen dem Mikroprozessor und der Überwachungseinrichtung in einem OPEN-Fenster erfolgt.

Derartige Überwachungseinrichtungen werden auch als Watchdogs bezeichnet und sind z.b. aus EP390639 bekannt. Eine besondere Ausgestaltung derartiger Watchdogs sind sogenannte Fenster-Watchdogs, die zeitlich voneinander beabstandete Zeitfenster bereitstellen, innerhalb denen ein Triggersignal die Betriebsbereitschaft des hochgefahrenen Mikroprozessors signalisierend empfangen werden kann, um die gewünschte Synchronisierung zwischen dem Mikroprozessor und der Überwachungseinrichtung herbeizuführen. Diese Zeitintervalle werden üblicherweise als OPEN-Fenster bezeichnet. Diese OPEN-Fenster werden durch sogenannte CLOSED-Fenster, in denen eine Triggersignalerfassung nicht möglich ist und der Triggersignaleingang der Überwachungseinheit somit gesperrt ist, voneinander getrennt. Die Zeitspanne eines OPEN- bzw. CLOSED-Fensters kann in Abhängigkeit von dem gewünschten Anwendungsfall gleich oder auch unterschiedliche ausgebildet sein. Die zeitliche Wechselfolge aus CLOSED-Fenster und OPEN-Fenster beginnen mit einem CLOSED-Fensterstatus.

Eine Synchronisierung zwischen dem Mikroprozessor und der Überwachungseinrichtung wird dadurch herbeigeführt, daß der Mikroprozessor bei Erreichen seiner Betriebsbereitschaft ein Triggersignal erzeugt, welches einen entsprechenden Triggersignaleingang der Überwachungseinrichtung beaufschlagt. Wird von der Überwachungseinrichtung ein Triggersignal erfaßt, erfolgt der Synchronisations-Reset, bei welchem beim Eintreffen des Triggersignals die Überwachungseinrichtung sofort den OPEN-Fenster-Status schließt und den Toggelbetrieb beginnend mit einem CLOSED-Fenster beginnt. Bei diesem Synchronisations-Reset schwingt der Taktgeber weiter, so daß die für die Synchronisierung notwendige Zeitspanne sehr gering ist.

Ausgehend von einem Ruhemodus sowohl des Mikroprozessors als auch der Überwachungseinrichtung wird dann im Mikroprozessor ein Wake-up-Interrupt erzeugt, wenn an einem seiner Eingänge ein weckfähiges Signals anliegt. Durch den beim Hochfahren steigenden Stromverbrauch des Mikroprozessors wird die Überwachungseinrichtung aktiviert, die ihren Toggelbetrieb zwischen den CLOSED-Fensterstatus und dem OPEN-Fensterstatus mit einem CLOSED-Fenster beginnend aufnimmt. Im Startzeitpunkt des Toggelbetriebes ist der Taktgeber des Mikroprozessors jedoch noch nicht eingeschwungen und stabil. Seine Betriebsbereitschaft hat der Mikroprozessor erst dann erreicht, wenn der Taktgeber eingeschwungen und stabil ist. Zu diesem Zeitpunkt wird von dem Mikroprozessor das Triggersignal erzeugt. Dieser Zeitpunkt ist innerhalb bestimmter Grenzen unbestimmt. Es kann daher vorkommen, daß das Triggersignal in das erste CLOSED-Fenster fällt, so daß durch dieses Triggersignal der gewünschte Synchronisations-Reset nicht herbeigeführt wird. Nur wenn das Triggersignal zufällig in das an das CLOSED-Fenster anschließende OPEN-Fenster fällt, erfolgt ein Synchronisations-Reset. Von diesem Zeitpunkt an verläuft der Toggelbetrieb der Überwachungseinrichtung synchron mit dem Mikroprozessor.

Trifft das Triggersignal nicht in ein OPEN-Fenster, ist vorgesehen, daß ein vollständiger Reset des Mikroprozessors, nachdem die Zeitspanne des ersten CLOSED- und OPEN-Fensters verstrichen ist, getriggert wird. Dieser Reset führt letztlich zwar auch zu einer Synchronisation zwischen dem Mikroprozessor und der Überwachungseinrichtung, jedoch stellt dies einen völligen Neustart des Mikroprozessors dar. In der für dieses Reset benötigten Zeit ist der Mikroprozessor nicht zum Ausführen der gewünschten Aktionen verwendbar. Darüber hinaus können bei einem solchen Reset in vorhandene Speicherglieder aufgenommene Daten gelöscht werden. Das Löschen der gespeicherten Angaben ist oftmals jedoch unerwünscht, insbesondere wenn die gespeicherten Daten Positionsdaten eines Aktors sind und eine Positionserfassung des Aktorbetriebes auf einer relativen Basis durchgeführt wird.

Da statistisch gesehen das von dem Mikroprozessor erzeugte Triggersignal weitaus häufiger in das erste CLOSED-Fenster des Toggelbetriebes der Überwachungseinrichtung fällt, wodurch indirekt nach Ablauf des auf dieses CLOSED-FENSTER folgenden OPEN-Fenster ein vollständiger Reset des Mikroprozessors und somit auch ein erneutes Einschwingen des Taktgebers ausgelöst wird, ist nicht nur der Stromverbrauch für die Synchronisierung unerwünscht hoch, sondern auch die Ansprechzeit des Mikroprozessors zu lang.

Es sind weitere Überwachungseinrichtungen bekannt, die Triggersignaleingänge mit einer Fensterabfolge ausschließlich aus OPEN-Fenstern bestehend aufweisen. Bei diesen Überwachungseinrichtungen tritt die oben beschriebene Problematik nicht auf. Jedoch ist die Überwachungsfunktion eines Fenster Watchdogs aufgrund der beschriebenen notwendigen Synchronisation zwischen dem Mikroprozessor und der Überwachungseinrichtung um ein Vielfaches verbessert.

Ausgehend von diesem Stand der Technik liegt der Erfindung daher zum einen die Aufgabe zugrunde, ein Verfahren zum Synchronisieren eines Fenster-Watchdogs mit einem Mikroprozessor bereitzustellen, mit dem eine Synchronisierung der beiden Einheiten möglich ist, ohne daß bei einem funktionstüchtigen Mikroprozessor die Gefahr eines vollständigen Resets des Mikroprozessors gegeben ist.

Ferner liegt der Erfindung die Aufgabe zugrunde, einen Fenster-Watchdog bereitzustellen, mit dem eine Synchronisation mit dem Mikroprozessor entsprechend möglich ist.

Die verfahrensbezogene Aufgabe wird erfindungsgemäß dadurch gelöst, daß
c) von der Überwachungseinrichtung nach einem Aktivieren derselben über eine vorbestimmte Zeitspanne ein OPEN-Fensterbereich bereitgestellt wird,
   c1) wobei die Zeitspanne zum Erfassen des von dem unter Normalbedingungen arbeitenden Mikroprozessors erzeugten Triggersignales ausgelegt ist.

Die vorrichtungsbezogene Aufgabe wird erfindungsgemäß dadurch gelöst, daß der nach einem Aktivieren der Überwachungseinrichtung von dieser zuerst bereitgestellte Fensterbereich die Eigenschaften eines OPEN-Fensters aufweist, dessen zeitliche Länge zum Erfassen des von dem unter Normalbedingungen arbeitenden Mikroprozessors erfolgten Triggersignales ausgelegt ist, an welchem OPEN-Fensterbereich sich eine Fensterwechselfolge bestehend aus CLOSED-Fenstern und OPEN-Fenstern beginnend mit einem CLOSED-Fenster anschließt.

Durch Bereitstellen eines Fenster-Watchdogs, dessen Toggelbetrieb mit einem OPEN-Fensterbereich nach siner Aktivierung beginnt, wobei der OPEN-Fensterbereich mehr Zeitspanne umfaßt, die ausreicht, um das Triggersignal eines normal funktionstüchtigen Mikroprozessors zu empfangen, ist gewährleistet, daß sich die erfindungsgemäße Überwachungseinrichtung innerhalb der zum Empfang des Triggersignals kritischen Zeitspanne in einem OPEN-Fensterstatus befindet und somit empfangsbereit ist.

Durch das Eintreffen des Triggersignales wird dann der Synchronisations-Reset ausgeführt, bei dem der Taktgeber des Mikroprozessors weiter schwingt. Die Synchronisation wird dadurch herbeigeführt, daß diesem Zeitpunkt die Überwachungseinrichtung sofort in den Toggelbetrieb zwischen dem CLOSED-Fensterstatus und dem OPEN-Fensterstatus beginnend mit einem CLOSED-Fenster umschaltet. Ein vollständiger, ein erneutes Anschwingen des Taktgebers umfassender Reset des Mikroprozessors erfolgt bei dieser Überwachungseinrichtung nur dann, wenn der Mikroprozessor nach der vorbestimmten Zeitspanne nicht ordnungsgemäß zu arbeiten begonnen hat und entsprechend von diesem kein Triggersignal erzeugt worden ist. Dies erfolgt jedoch zur einem Zeitpunkt, der so gewählt ist, daß der Nichteingang eines Triggersignales vermuten läßt, daß der Mikroprozessor fehlerhaft arbeitet. In diesen Fällen kann ein Weiterbetrieb des Mikroprozessors nur durch dessen erneute Initialisierung herbeigeführt werden.

Eine Synchronisierung wird bei der erfindungsgemäßen Überwachungseinrichtung bei normal funktionstüchtigem Mikroprozessor in jedem Fall ohne einen vollständigen Reset des Mikroprozessors durchgeführt. Der für die Durchführung der Synchronisierung notwendige Stromverbrauch ist somit auf ein Minimum reduziert. Darüber hinaus ist eine Synchronisierung zwischen dem Mikroprozessor und der Überwachungseinrichtung wesentlich rascher hergestellt als bei vorbekannten Fenster-Watchdogs. Entsprechend gering ist die Ansprechzeit des Mikroprozessors, so daß die gewünschte Aktion unvermittelt ausgeführt wird. Der vorgesehene vollständige Resettrigger nach Schließen des OPEN-Fensterbereichs, wenn kein Triggersignal empfangen worden ist, dient somit ausschließlich als Notreset.

Als bevorzugte Zeitspanne für den ersten OPEN-Fensterbereich wird eine Länge angesehen, die zumindest der maximalen Einschwingdauer des dem Mikroprozessor zugeordneten Taktgebers entspricht. Dabei entspricht das Zeitintervall zwischen der maximalen Einschwingdauer des Taktgebers und dem Schließen des OPEN-Fensterbereiches einer Sicherheitszeitspanne.

In einem bevorzugten Ausführungsbeispiel sind als erster OPEN-Fensterbereich zwei OPEN-Fenster vorgesehen, deren addierte Zeitspanne eines CLOSED-Fenster - OPEN-Fenster Intervalles des nachgeschalteten Toggelbetriebes entspricht.

Weitere Vorteile und Ausgestaltungen der Erfindung sind Bestandteil der weiteren Unteransprüche sowie der nachfolgenden Beschreibung.

Nachfolgend wird die Erfindung anhand der in den Figuren der Zeichnung angegebenen Ausführungsbeispiele näher erläutert. Es zeigt dabei:
- Figur 1: ein schematisiertes Diagramm mit den sich zeitlich ändernden für eine Synchronisierung zwischen einem Mikroprozessor und einer Überwachungseinheit notwendigen Synchronisierungsparameter;
- Figur 2: ein schematisiertes Diagramm entsprechend Figur 1, das das Hochfahren eines Mikroprozessors aus dem Ruhemodus in einen Arbeitsmodus zeigt.

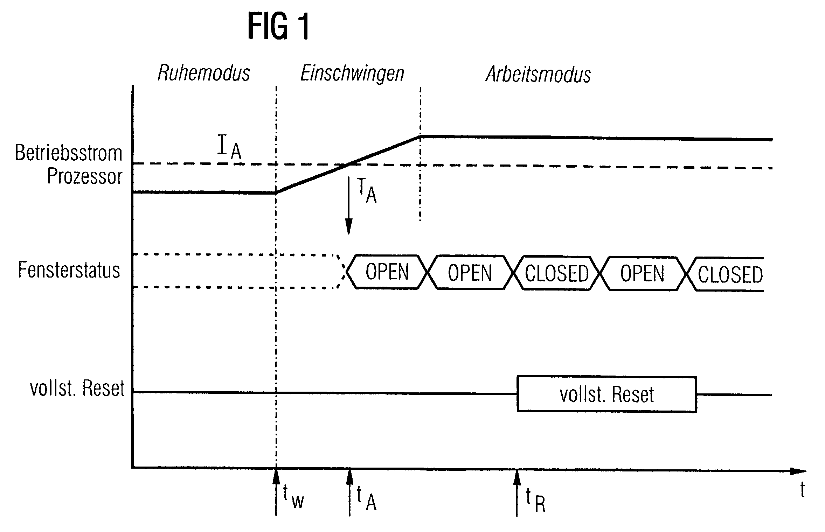

In Figur 1 sind auf der Ordinatenachse übereinander unterschiedliche Parameter, die im Zusammenhang mit der Beschreibung des erfindungsgemäßen Verfahrens bzw. mit der erfindungsgemäßen Einrichtung von Interesse sind, aufgetragen. Zu oberst ist die Betriebsstromkurve des Mikroprozessors aufgetragen. Darunter ist der Fensterstatus der Überwachungseinrichtung dargestellt. Zu unterst ist eine den Zeitpunkt eines vollständigen, den Mikroprozessor neu startenden Resets aufgetragen. Die Abszissenachse stellt die Zeitachse dar.

Der gezeigte Diagrammausschnitt beginnt zeitlich in einem Ruhemodus, in dem der Mikroprozessor sowie die Überwachungseinrichtung inaktiv sind. Im Zeitpunkt t_{W} liegt an einem Eingang des Mikroprozessors ein Wecksignal an, so daß ein Wake-up-Interrupt erzeugt wird. Mit dem Interrupt beginnt der Taktgeber mit seinem Einschwingvorgang. Mit zunehmender Schwingfrequenz erhöht sich der Betriebsstrom des Mikroprozessors. Überschreitet der Betriebsstrom des Mikroprozessors einen vorgegebenen Schwellenwert I_{A}, dann wird die Überwachungseinrichtung aktiviert. Dieser Zeitpunkt ist auf der Zeitachse t mit t_{A} gekennzeichnet.

Der Triggersignaleingang der Überwachungseinrichtung stellt zunächst zwei OPEN-Fenster zur Verfügung, bevor dieser in den normalen Toggelbetrieb zwischen dem CLOSED-Fensterstatus und dem OPEN-Fensterstatus übergeht. Für den Fall, daß innerhalb der Zeitspanne der beiden ersten OPEN-Fenster die Überwachungseinrichtung kein die Bereitschaft des Mikroprozessors signalisierendes Triggersignal erhalten hat, erfolgt ein vollständiger Reset des Mikroprozessors, so daß bei einem nach diesem Reset funktionstüchtigen Mikroprozessor eine Synchronisation zwischen Mikroprozessor und der Überwachungseinheit gegeben ist. Dieser Zeitpunkt ist auf der Zeitachse t mit t_{R} gekennzeichnet.

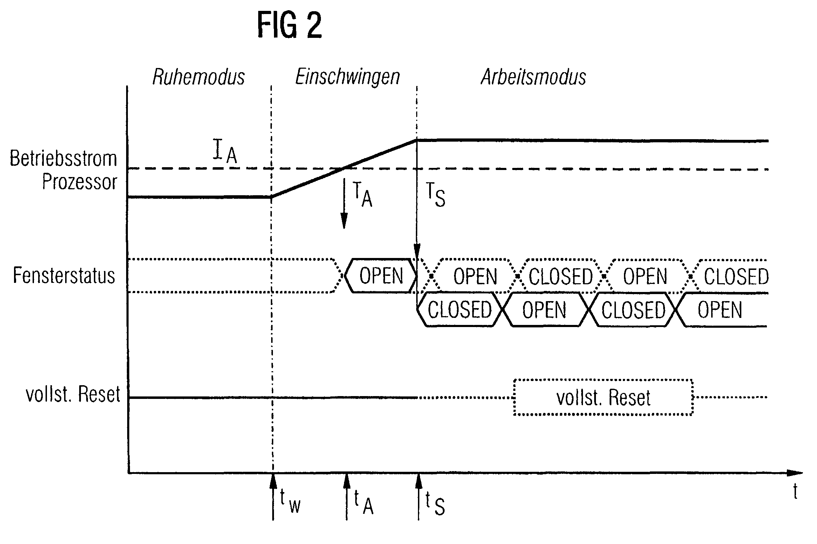

Figur 2 zeigt nun das Verhalten der Überwachungseinrichtung, wenn der funktionstüchtige Mikroprozessor bei Erreichen seiner Betriebsbereitschaft, d.h. bei Erreichen des maximalen Betriebsstromes, das diesen Zustand signalisierende Triggersignal an die Überwachungseinrichtung weiterleitet. Dieses Triggersignal ist in Figur 2 mit T_{S} und der Zeitpunkt des Erzeugens des Triggersignals mit t_{S} gekennzeichnet.

Da die beiden OPEN-Fenster zusammen eine Zeitspanne definieren, die länger als die maximale Einschwingdauer des vom Mikroprozessors zugeordneten Taktgebers ist, trifft das Triggersignal T_{S} immer in den durch die beiden OPEN-Fenster gebildeten OPEN-Fensterbereich. Die Überwachungseinrichtung beginnt in diesem Zeitpunkt mit ihrem Toggelbetrieb zwischen dem CLOSED-Fensterstatus und dem OPEN-Fensterstatus beginnend mit einem CLOSED-Fenster, wodurch die Synchronisation hergestellt ist.

Zur besseren Darstellung ist der beginnende Toggelbetrieb in einer weiteren Zeile unterhalb des tatsächlichen Fensterstatus aufgetragen. Aus dieser Figur wird deutlich, daß der vorgesehene (Not) Reset im Zeitpunkt t_{R} nur dann getriggert wird, wenn der Mikroprozessor nicht ordnungsgemäß zu arbeiten begonnen hat.

## Patentansprüche

1. Verfahren zum Synchronisieren einer elektronischen Einrichtung zur Funktionsüberwachung eines Mikroprozessors mit dem Mikroprozessor beim Hochfahren des Mikroprozessors aus einem Ruhemodus in einen Arbeitsmodus,
a) wobei die Synchronisierung die Bereitstellung eines von dem Mikroprozessor erzeugten, an die Überwachungseinrichtung übertragenen, die Betriebsbereitschaft des Mikroprozessors signalisierenden Triggersignals umfaßt,
b) wobei die Überwachungseinrichtung zum Empfangen der Triggersignale zeitlich zwischen einem CLOSED-Fensterstatus bei dem das signalisierende Triggersignal nicht von der Überwachungseinrichtung erfaßt werden kann, und einem OPEN-Fensterstatus, bei dem das empfangende Triggersignal eine Synchronisierung zwischen dem Mikroprozessor und der Überwachungseinrichtung herbeiführt, toggelt,
**dadurch gekennzeichnet, daß**
c) von der Überwachungseinrichtung nach einem Aktivieren derselben zuerst über eine vorbestimmte Zeitspanne ein OPEN-Fensterbereich bereitgestellt wird,
c1)wobei die Zeitspanne zum Erfassen des von dem unter Normalbedingungen arbeitenden Mikroprozessors erzeugten Triggersignales ausgelegt ist.

2. Verfahren nach Anspruch 1,
**dadurch gekennzeichnet, daß**
c2)nach Ablauf dieser Zeitspanne die Überwachungseinrichtung zwischen einem CLOSED-Fensterstatus und einem OPEN-Fensterstatus beginnend mit einem CLOSED-Fenster toggelt.

3. Verfahren nach einem der Ansprüche 1 oder 2,
**dadurch gekennzeichnet, daß** durch die Überwachungseinrichtung ein erster OPEN-Fensterbereicht bereitgestellt wird, dessen zeitliche Länge zumindest der maximalen Einschwingdauer des dem Mikroprozessor zugeordneten Taktgebers entspricht.

4. Verfahren nach einem der Ansprüche 1 bis 3,
**dadurch gekennzeichnet, daß**
die Übewachungseinrichtung aktiviert wird, bevor der Mikroprozessor seine vollständige Betriebsbereitschaft erreicht hat.

5. Elektronische Einrichtung zur Funktionsüberwachung eines Mikroprozessors mit einem Triggersignaleingang, der zeitlich getaktet zwischen einer Sperrstellung, auch als CLOSED-Fenster bezeichnet, und einer Durchlaßstellung, auch als OPEN-Fenster bezeichnet, toggelt, so daß ein Triggersignalempfang zur Herbeiführung einer Synchronisation zwischen dem Mikroprozessor und der Überwachungseinrichtung in einem OPEN-Fenster erfolgt,
**dadurch gekennzeichnet, daß**
der nach einem Aktivieren der Überwachungseinrichtung von dieser zuerst bereitgestellte Fensterbereich die Eigenschaften eines OPEN-Fensters aufweist, dessen zeitliche Länge zum Erfassen des von dem unter Normalbedingungen arbeitenden Mikroprozessors erfolgten Triggersignales ausgelegt ist, an welchem OPEN-Fensterbereich sich eine Fensterwechselfolge bestehend aus CLOSED-Fenstern und OPEN-Fenstern beginnend mit einem CLOSED-Fenster anschließt.

6. Überwachungseinrichtung nach Anspruch 5,
**dadurch gekennzeichnet, daß**
der erste OPEN-Fensterbereich eine Zeitspanne umfaßt, deren Länge zumindest der maximale Einschwingdauer des dem Mikroprozessor zugeordneten Taktgebers entspricht.

7. Überwachungseinrichtung nach Anspruch 5,
**dadurch gekennzeichnet, daß**
der erste OPEN-Fensterbereich eine Zeitspanne umfaßt, deren Länge geringfügig länger ist als die maximale Einschwingdauer des dem Mikroprozessor zugeordneten Taktgebers.

8. Überwachungseinrichtung nach einem der Ansprüche 5 bis 7,
**dadurch gekennzeichnet, daß**
der erste OPEN-Fensterbereich aus mehreren einzelnen OPEN-Fenstern besteht.

9. Überwachungseinrichtung nach einem der Ansprüche 5 bis 7,
**dadurch gekennzeichnet, daß**
der erste OPEN-Fensterbereich aus zwei einzelnen OPEN-Fenstern besteht.

## Claims

1. Method for the synchronisation of an electronic device for monitoring the function of a microprocessor using the microprocessor when starting up the microprocessor from a quiescent mode to a working mode,
a) the synchronisation including the making available of a trigger signal produced by the microprocessor, transmitted to the monitoring device, signalling the readiness of the microprocessor to run,
b) the monitoring device for receiving the trigger signals toggling in time between a CLOSED window status, during which it is not possible for the signalling trigger signal to be detected by the monitoring device, and an OPEN window status, during which the received trigger signal brings about a synchronisation between the microprocessor and the monitoring device,
**characterised in that**
c) an OPEN window range is first made available by the monitoring device, after activation of the same, over a pre-determined time span,
c1) the time span being designed for the detection of the trigger signal produced by the microprocessor when working under normal conditions.

2. Method according to Claim 1, **characterised in that**
c2) after expiry of this time span, the monitoring device toggles between a CLOSED window status and an OPEN window status starting with a CLOSED window.

3. Method according to one of Claims 1 and 2, **characterised in that** a first OPEN window range is made available by the monitoring device, whose length in time corresponds at least to the maximum settling-down time of the clock generator assigned to the microprocessor.

4. Method according to one of Claims 1 to 3, **characterised in that** the monitoring device is activated before the microprocessor has reached its full readiness for operation.

5. Electronic device for monitoring the function of a microprocessor with a trigger signal input, which clocked in time toggles between a blocked setting, also described as a CLOSED window, and a pass-through setting, also described as an OPEN window, so that the receipt of a trigger signal for bringing about a synchronisation between the microprocessor and the monitoring device occurs in an OPEN window, **characterised in that** the first window range made available by the monitoring device after this has been activated has the characteristics of an OPEN window, the length in time of which is designed for the detection of the trigger signal produced by the microprocessor when working under normal conditions, the said OPEN window range being followed by an alternating sequence of windows consisting of CLOSED windows and OPEN windows starting with a CLOSED window.

6. Monitoring device according to Claim 5, **characterised in that** the first OPEN window range encompasses a time span, the length of which corresponds at least to the maximum settling-down time of the clock generator assigned to the microprocessor.

7. Monitoring device according to Claim 5, **characterised in that** the first OPEN window range encompasses a time span, the length of which is slightly longer than the maximum settling-down time of the clock generator assigned to the microprocessor.

8. Monitoring device according to one of Claims 5 to 7, **characterised in that** the first OPEN window range consists of several individual OPEN windows.

9. Monitoring device according to one of Claims 5 to 7, **characterised in that** the first OPEN window range consists of two individual OPEN windows.

## Revendications

1. Procédé de synchronisation d'une installation électronique pour surveiller le fonctionnement d'un microprocesseur lors de la mise en route du microprocesseur à partir d'un mode de repos vers un mode actif, selon lequel
b) la synchronisation comprend l'élaboration d'un signal de déclenchement produit par le microprocesseur, transmis à l'installation de surveillance et signalant l'aptitude au fonctionnement du microprocesseur,
c) l'installation de surveillance, pour recevoir les signaux de déclenchement, peut distinguer dans le temps entre un état de fenêtre « fermé » dans lequel aucun signal de déclenchement ne peut être saisi par l'installation de surveillance, et un état de fenêtre « ouvert » dans lequel le signal de déclenchement reçu bascule une synchronisation entre le microprocesseur et l'installation de surveillance,
**caractérisé en ce que**
d) après activation de l'installation de surveillance, celle-ci fournit tout d'abord une plage d'états de fenêtre « ouverte » pour un intervalle de temps prédéterminé, et
c1) l'intervalle de temps est conçu pour saisir le signal de déclenchement produit par le microprocesseur fonctionnant dans des conditions normales.

2. Procédé selon la revendication 1,
**caractérisé en ce que**
c2) à la fin de cet intervalle de temps, l'installation de surveillance bascule entre l'état de fenêtre « fermé » et un état de fenêtre « ouvert » en commençant par un état de fenêtre « fermé ».

3. Procédé selon l'une des revendications 1 ou 2,
**caractérisé en ce que**
par l'installation de surveillance, on fournit une première plage d'états de fenêtre « ouvert » dont la longueur dans le temps correspond au moins à la durée maximale de stabilisation d'oscillations de l'horloge associée au microprocesseur.

4. Procédé selon l'une quelconque des revendications 1 à 3,
**caractérisé en ce que**
l'installation de surveillance est activée avant que le microprocesseur n'atteigne son aptitude au fonctionnement, totale.

5. Installation électronique de surveillance de fonctionnement d'un microprocesseur comportant une entrée de signal de déclenchement qui bascule périodiquement entre une position de blocage encore appelée état de fenêtre « fermé » et une position de passage encore appelée état de fenêtre « ouvert », de façon à permettre la réception d'un signal de déclenchement en état de fenêtre « ouvert » lors de l'exécution d'une synchronisation entre le microprocesseur et l'installation de surveillance,
**caractérisée en ce que**
la plage de fenêtre produite d'abord après l'activation de l'installation de surveillance, présente des propriétés d'un état de fenêtre « ouvert » dont la longueur dans le temps est conçue pour saisir le signal de déclenchement produit par le microprocesseur dans des conditions normales, la plage d'état de fenêtre « ouverte » étant suivie par une suite d'états de fenêtre « fermé » et « ouvert » en commençant par un état de fenêtre « fermé ».

6. Installation selon la revendication 5,
**caractérisée en ce que**
la première plage d'état de fenêtre « ouvert » comprend une durée dont la longueur correspond au moins à la durée de transition maximale de l'horloge associée au microprocesseur.

7. Installation selon la revendication 5,
**caractérisée en ce que**
la première plage d'état de fenêtre « ouvert » comprend une durée dont la longueur est légèrement plus grande que la durée transition maximale de l'horloge associée au microprocesseur.

8. Installation selon l'une quelconque des revendications 5 à 7,
**caractérisée en ce que**
la première plage d'état de fenêtre « ouverte » est formée de plusieurs états « ouverts », séparés.

9. Installation selon l'une quelconque des revendications 5 à 7,
**caractérisée en ce que**
la première plage d'état de fenêtre « ouverte » est formée de deux états « ouverts », distincts.
